# EUROPEAN PATENT SPECIFICATION

(11) **EP 1 821 181 B1**
(45) Date of publication and mention of the grant of the patent: **19.07.2017**
(21) Application number: 07250319.6
(22) Date of filing: 26.01.2007
(51) Int. Cl.: G06F 3/0354

(54) **Mouse structure**
Mausstruktur
Structure de souris

(30) Priority: 14.02.2006 CN 200610007538
(43) Date of publication of application: 22.08.2007
(73) Proprietor: ASUSTeK Computer Inc., Peitou,Taipei (TW)
(72) Inventor: Tsui, Chia-Chang, Peitou District Taipei City 11259 (TW)
(74) Representative: Chamberlain, Alan James

(56) References cited:
- CN-Y- 2 696 042
- DE-U1- 29 819 990
- DE-U1- 29 906 631
- JP-A- 58 055 783
- JP-A- 2004 320 310
- US-A1- 2002 118 174
- US-B1- 6 469 693

## Description

### BACKGROUND OF THE INVENTION

### Field of the Invention

The present invention relates to a man-machine interface (MMI) device structure, and more particularly to a mouse structure.

### Description of the Related Art

In this information era, human's dependence on electronic products is increasing every day. Due to their high efficiency and portability, electronic products such as notebook computer, cellular phone, personal digital assistant and digital portable music player have become indispensable tools in our daily life. To input our commands into the electronic product so that the system within the electronic product can carry out our instructions, some form of man-machine interface is required. At present, the most commonly used man-machine interface devices include electronic devices such as keyboard, mouse and touch pad. In the following the method of assembling a mouse is explained in more detail.

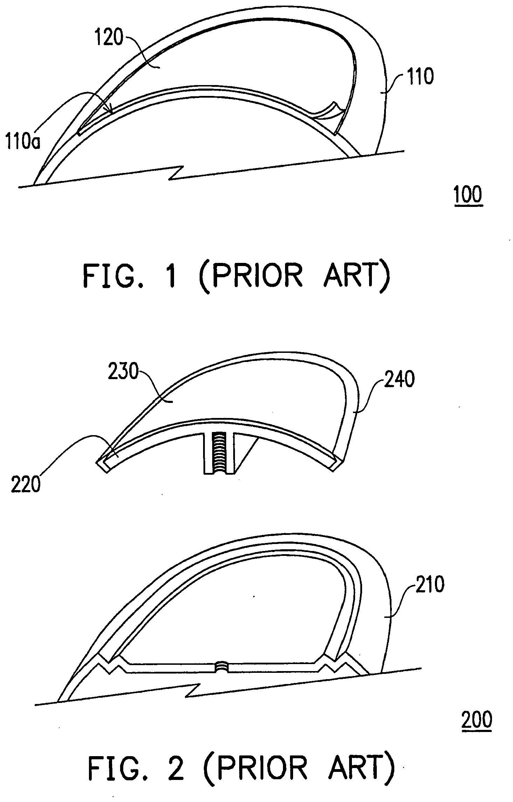

Fig. 1 is a schematic diagram of a conventional mouse. The mouse 100 in Fig.1 includes a casing 110, some leather 120 and a glue layer 130. The casing 110 has a concave groove 110a and the leather is attached to the interior of the concave groove 110a of the casing 110 through the glue layer 130. More specifically, the method of assembling the mouse 110 includes tailoring a piece of raw leather into a specified shape, for example, a shape that matches the concave groove 110a, and then gluing the tailored leather 120 directly to the interior of the concave groove 110a of the casing 110. However, this mouse assembling process often produces a hairy rim near the edge of the leather 120 or a rising at the edge of the leather 120. Thus, the rate of production of disqualified mouse is rather high.

Fig. 2 is a schematic diagram of another conventional mouse. The mouse in Fig. 2 includes a casing 210, a plastic member 220, some leather 230 and a plastic rim 240. The plastic member 220 and the casing 210 are assembled together. Furthermore, the leather 230 is attached to the plastic member 220 and the plastic rim 240 encloses the edge of the plastic member 220 and the leather 230 to prevent the rising at the edge of the leather 230. More specifically, a piece of raw leather is formed and trimmed to obtain a piece of leather 230 with the required shape. Then, the tailored leather 230 is glued to the plastic member 220. Thereafter, an in-mold decoration (IMD) injection molding process is carried out for the leather 230 and the plastic member 220 to form the plastic rim 240. Finally, the plastic member 220 and the casing 210 are assembled together to form a complete mouse 200.

Although the productivity of the mouse 200 is high, the edge of the plastic member 220 and leather 230 needs to have a special design for matching with the IMD injection molding process. It is also difficult to find a matching color between the plastic rim 240 and the leather 230 so that the mouse 200 has a rather complicated look and an unmatched coloring. Furthermore, due to the need to carry out an IMD injection molding process, the leather 230 can only be fabricated using a synthetic leather material. Moreover, it is difficult to form a tight junction with the edge of the leather in the molding process.

CN 2696042 relates to a leather facing computer mouse. JP 2004 320310 describes a mobile electronic apparatus with removable leather-made sheets. DE29906631 describes a housing configuration for a computer mouse.

### SUMMARY OF THE INVENTION

Accordingly, at least one objective of the present invention is to provide a mouse structure that can minimize the rising at the edge of a piece of leather.

Another objective of the present invention is to provide a mouse structure that can be enclosed using real leather.

Yet another objective of the present invention is to provide a leather-enclosed mouse structure that uses a casing and a assembly to press down the leather.

To achieve these and other advantages and in accordance with the purpose of the invention, as embodied and broadly described herein, the invention provides a mouse structure. The mouse structure includes a casing, an assembly and a leather layer. The body casing and the assembly are assembled together. The assembly has a first surface and a second surface. The leather layer has a first portion and a second portion. The first portion covers the first surface and the second portion partially covers the second surface. The second surface is located inside the casing such that the casing presses against part of the second portion.

In one embodiment of the present invention, the assembly and the casing are assembled together through a locking member, a latch or the application of glue.

In one embodiment of the present invention, the leather can be natural leather or synthetic leather.

In one embodiment of the present invention, the leather is glued to the assembly.

Accordingly, the leather is disposed on the first surface of the assembly and encloses the edge of the assembly in the present invention. Therefore, the edge of the leather is prevented from forming a rising that ruins the aesthetic appearance of the mouse.

It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Fig. 1 is a schematic diagram of a conventional mouse.
Fig. 2 is a schematic diagram of another conventional mouse.
Fig. 3 is schematic diagram of a mouse structure according to one embodiment of the present invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

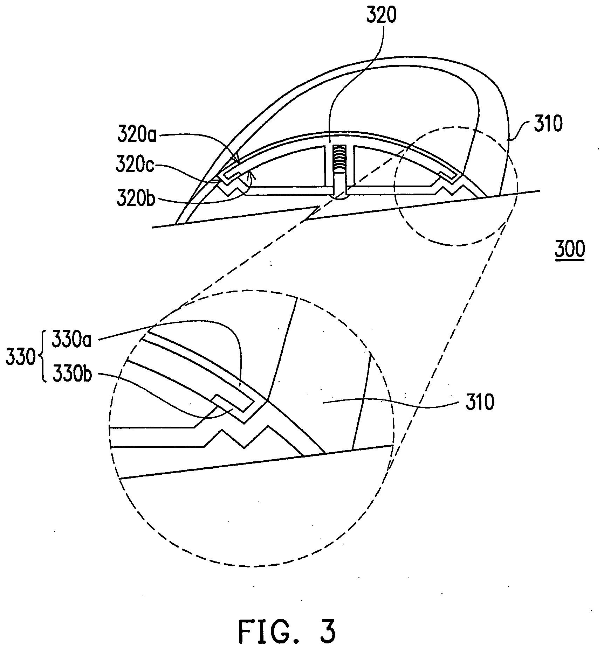

Fig. 3 is a schematic diagram of a mouse structure according to one embodiment of the present invention. As shown in Fig. 3, the mouse structure 300 in the present embodiment includes a casing 310, an assembly 320 and a piece of leather 330. The assembly 320 and the casing 310 are assembled together. The assembly 320 has a first surface 320a, a second surface 320b and a side surface 320c. The side surface 320c joins up with the first surface 320a and the second surface 320b. When the assembly 320 is a polygon, it has a number of side surfaces 320c. Furthermore, the assembly 320 can be fabricated using plastics. Moreover, the assembly 320 can be a push button.

The leather 330 has a first portion 330a and a second portion 330b. The first portion 330a covers the first surface 320a and the second portion 330b covers part of the second surface 320b. The second surface 320b is located inside the casing 310. Moreover, the casing 310 is pressed against part of the second portion 330b. In other words, the leather 330 encloses the first surface 320a, the side surface 320c and part of the second surface 320b. In the present embodiment, the leather 330 can be a piece of natural leather or a piece of synthetic leather. In addition, the leather 330 may have a surface pattern.

In the assembling process, the leather 330 can be glued to the first surface 320a of the assembly 320. Thereafter, the edge of the leather 330 is flipped over and glued to the bottom of the assembly 320, that is, the second surface 320b. Thus, the leather 330 is able to enclose the edge of the assembly 320, that is, the side surface 320c. Finally, the assembly 320 with the leather 330 is engaged to the casing 310 through a locking member, a latch, an application of glue or other suitable means. Because the edge of the leather 330 has flipped over the bottom of the assembly 320 and the leather 330 is gripped by the casing 310 and the assembly 320, the leather 330 is difficult to loosen up or resulted in eversion.

In addition, the leather 330 has a certain degree of extensibility. Therefore, the first surface 320a can be a plane surface or a curved surface and the gap between the leather 330 and the casing 310 can be reduced. In other words, the mouse structure 300 can have a more appealing external appearance.

If the mouse structure 300 needs a rework, the leather 330 can be easily taken out from the assembly 320 and the leather 330 can be reattached. In other words, the assembly 320 will not be damage in the reworking process so that the cost of reworking is significantly reduced. In addition, the assembly 320 is a common component. Hence, a variety of products can be obtained simply by changing the leather type or the pattern on the leather.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims and their equivalents.

## Claims

1. A mouse structure (300), comprising:
a casing (310) having a recess; and
an assembly (320) assembled to the casing so as to be received within the recess of the casing, the mouse structure further **characterised in that**:
the assembly has a first surface (320a) forming the top of the assembly, a side surface (320c) and a second surface (320b) opposite to the first surface (320a) forming the bottom of the assembly, wherein the side surface (320c) joins the first surface (320a) and the second surface (320b) forming the edge of the assembly; and
wherein the mouse structure further comprises:
a piece of leather (330) having a first portion (330a) and a second portion (330b);
wherein the first portion (330a) of the piece of leather covers the first surface (320a) and the second portion (330b) covers the side surface (320c) and part of the second surface (320b); and
wherein the assembly (320) is engaged to the casing through a locking member, so that the second surface (320b) faces the casing and both the side surface (320c) and the second surface (320b) are located inside the recess of the casing, and the casing presses against part of the second portion (330b) of the piece of leather that covers the side surface (320c) and part of the second surface (320b).

2. The mouse structure of claim 1, wherein the leather (330) is fabricated using natural leather or synthetic leather.

3. The mouse structure of claim 1, wherein the leather (330) is glued to the assembly (320).

4. The mouse structure of claim 1, wherein the first portion (330a) of the leather (330) is glued to the first surface (320a) of the assembly (320).

## Patentansprüche

1. Eine Maus-Konstruktion (300), umfassend:
ein Gehäuse (310), das eine Aussparung aufweist; und
eine mit dem Gehäuse zusammengebaute Anordnung (320), die in der Aussparung des Gehäuses aufgenommen wird, wobei die Maus-Konstruktion weiterhin **dadurch gekennzeichnet ist, dass**:
die Anordnung eine erste, die Oberseite der Anordnung bildende Oberfläche (320a), eine Seitenfläche (320c) und eine gegenüber der ersten Oberfläche (320a) liegende zweite, den Boden der Anordnung bildende Oberfläche (320b) aufweist, wobei die Seitenfläche (320c) mit der ersten Oberfläche (320a) und der zweiten Oberfläche (320b) verbunden ist und den Rand der Anordnung bildet; und
wobei die Maus-Konstruktion ferner aufweist:
ein Lederstück (330), das einen ersten Abschnitt (330a) und einen zweiten Abschnitt (330b) aufweist;
wobei der erste Abschnitt (330a) des Lederstückes die erste Oberfläche (320a) und der zweite Abschnitt (330b) des Lederstückes die Seitenfläche (320c) und einen Teil der zweiten Oberfläche (320b) bedeckt; und
wobei die Anordnung (320) durch ein Verriegelungselement mit dem Gehäuse verriegelt ist, damit die zweite Oberfläche (320b) dem Gehäuse zugewandt ist und sowohl die Seitenfläche (320c) als auch die zweite Oberfläche (320b) im Innern der Aussparung des Gehäuses angeordnet sind und das Gehäuse gegen einen Teil des zweiten Abschnitts (330b) des Lederstückes drückt, das die Seitenfläche (320c) und einen Teil der zweiten Oberfläche (320b) bedeckt.

2. Die Maus-Konstruktion gemäß Anspruch 1, wobei das Leder (330) aus Naturleder oder Kunstleder hergestellt wird.

3. Die Maus-Konstruktion gemäß Anspruch 1, wobei das Leder (330) auf die Anordnung (320) aufgeklebt ist.

4. Die Maus-Konstruktion gemäß Anspruch 1, wobei der erste Abschnitt (330a) des Leders (330) auf die erste Oberfläche (320a) der Anordnung (320) aufgeklebt ist.

## Revendications

1. Une structure de souris (300), comprenant :
un boîtier (310) ayant un évidement ; et
un assemblage (320) monté sur le boîtier de façon à être reçu à l'intérieur de l'évidement du boîtier, la structure de souris étant davantage **caractérisée en ce que** :
l'assemblage a une première surface (320a) formant le sommet de l'assemblage, une surface latérale (320c) et une seconde surface (320b) opposée à la première surface (320a) formant le fond de l'assemblage, dans laquelle la surface latérale (320c) se joint à la première surface (320a) et la seconde surface (320b) formant le bord de l'assemblage ; et
dans lequel la structure de souris comprend davantage :
un morceau de cuir (330) ayant une première portion (330a) et une seconde portion (330b) ;
dans lequel la première portion (330a) du morceau de cuir recouvre la première surface (320a) et la seconde portion (330b) recouvre la surface latérale (320c) et une portion de la seconde surface (320b) ; et
dans lequel l'assemblage (320) est engagé sur le boîtier à travers un élément de verrouillage, si bien que la seconde surface (320b) soit opposée au boîtier et
la surface latérale (320c) et la seconde surface (320b) sont à la fois situées à l'intérieur de l'évidement du boîtier, et le boîtier se presse contre une partie de la seconde portion (330b) du morceau de cuir qui recouvre la surface latérale (320c) et une portion de la seconde surface (320b).

2. La structure de souris selon la revendication 1, dans laquelle le cuir (330) est fabriqué à l'aide de cuir naturel ou de cuir synthétique.

3. La structure de souris selon la revendication 1, dans laquelle le cuir (330) est collé à l'assemblage (320).

4. La structure de souris selon la revendication 1, dans laquelle la première portion (330a) du cuir (330) est collée à la première surface (320a) de l'assemblage (320).
